## Europäisches Patentamt
## European Patent Office
## Office européen des brevets

(19)

(11) Numéro de publication: **0 068 922**
**B1**

(12)

# FASCICULE DE BREVET EUROPEEN

(45) Date de publication du fascicule du brevet: **20.11.86**

(51) Int. Cl.⁴: **G 01 J 3/28**

(21) Numéro de dépôt: **82400960.9**

(22) Date de dépôt: **25.05.82**

(54) Dispositif pour l'observation d'un corps céleste depuis un aéronef.

(30) Priorité: **27.05.81 FR 8110545**

(43) Date de publication de la demande:
**05.01.83 Bulletin 83/01**

(45) Mention de la délivrance du brevet:
**20.11.86 Bulletin 86/47**

(84) Etats contractants désignés:
**AT BE CH DE FR GB IT LI LU NL SE**

(73) Titulaire: **CENTRE NATIONAL D'ETUDES SPATIALES**
**129, Rue de l'Université**
**F-75007 Paris (FR)**

(72) Inventeur: **Vermande, Paul Résidence Aubun**
**262, Avenue St Exupéry Bâtiment Valais**
**F-31400 Toulouse (FR)**

(74) Mandataire: **Schrimpf, Robert et al**
**Cabinet Regimbeau 26, Avenue Kléber**
**F-75116 Paris (FR)**

(56) Documents cités:
**US-A-3 660 594**
**US-A-3 702 735**

**IBM TECHNICAL DISCLOSURE BULLETIN, vol.22, no.2, juillet 1979, New York (US), A.W. COX: "Multiple beam interferometer", pages 701-702**

**JOURNAL OF OPTICS, vol.12, no.2, mars 1981, Paris (FR), G. CESINI et al.: "The use of charge-coupled devices for automatic processing of interferograms", pages 99-103**

**OPTICS COMMUNICATIONS, vol.30, no.2, aou7t 1979, Amsterdam (NL), R. CHAUX et al.:**

(56) References cited:
**"Diameter measurements of fabry-perot interference rings using CCD linear sensors", pages 239-244**

**OPTICS COMMUNICATIONS, vol.20, no.2, février 1977, Amsterdam (NL), S. DEBRUS: "Speckle shearing interferometer using a savart plate", pages 257-261**

**APPLIED OPTICS, vol.15, no.3, mars 1976, New York (US), W. HAYDEN SMITH et al.: "Spectroscopic photoelectric imaging Fabry-Perot Interferometer: its development and preliminary observational results", pages 717-724**

EP 0 068 922 B1

Courier Press, Leamington Spa, England.

## Description

L'invention concerne l'observation d'un corps céleste, notamment de la terre, depuis un aéronef, notamment un satellite ou un ballon.

Il est connu d'observer des bandes spectrales d'une zone du globe terrestre depuis un satellite stabilisé au moyen d'un système dispersif (prisme ou réseau) ou au moyen de filtres ou de lames dichroïques.

Par exemple, le brevet E.U.A. 3 660 594 décrit un dispositif d'observation comprenant une pluralité de prismes ou de réseaux qui dispersent spectralement chaque image élémentaire sur la surface photosensible d'un tube de caméra, ce dispositif étant destiné à être monté dans un aéronef.

Cette technique implique l'utilisation de plusieurs dispositifs optiques et la résolution qu'elle permet d'obtenir est faible.

On a cherché à éviter ces inconvénients et on a proposé un dispositif d'observation comprenant un dispositif optique unique et permettant d'obtenir une résolution plus élevée, comme décrit par exemple dans le brevet E.U.A. 3 702 735 de la N.A.S.A.

Ce brevet décrit un dispositif d'observation qui comporte essentiellement un interféromètre de Michelson associé à des photodétecteurs. Des moyens sont prévus pour faire osciller l'un des miroirs de l'interféromètre afin que chaque détecteur reçoive un signal d'interférogramme qui soit en relation fonctionnelle avec le spectrogramme de la lumière de l'objet étudié. Les signaux fournis par les détecteurs sont transférés à une unité de calcul qui élabore le spectrogramme à partir de ces signaux par transformation de Fourier.

Un tel système améliore la résolution mais il est très difficile de réaliser à bord d'un satellite ou autre aéronef le mouvement nécessaire du miroir de l'interféromètre. On a proposé une variante d'interféromètre de Michelson (IBM Technical Disclosure Bulletin, vol. 22. No. 2 July 1979) affranchi du problème du déplacement d'un miroir mais au prix d'autres inconvénients. On connaît d'autre part les interféromètres Fabry-Pérot (Optics Communications, vol. 30, No. 2, p.239—244) et leur application à l'étude des planetes (Applied Optics, vol. 15, No. 3, p.717—724), mais la stabilité parfaite exigée pose un problème.

Un but de l'invention est de fournir un système permettant d'obtenir l'interférogramme de chaque zone élémentaire d'un corps céleste, notamment de la terre depuis un aéronef, notamment depuis un satellite à orbite circulaire, au moyen d'un dispositif optique unique, sans déplacement de pièces optiques.

Un autre but de l'invention est de fournir un système permettant de traiter les interférogrammes en temps réel pour obtenir les spectres des zones observées.

Un autre but de l'invention est de fournir un système permettant d'obtenir le spectre de la source observée avec une très haute résolution spectrale.

Une très haute résolution, selon la présente invention, est une résolution de quelques nanomètres, alors que les systèmes connus permettent au mieux d'obtenir une résolution de quelques dizaines de nanomètres.

Une application typique de l'invention est l'observation des océans, notamment pour la recherche du phytoplancton. Dans cette application, l'invention permet d'observer une douzaine de bandes spectrales différentes, large chacune d'une dizaine de nanomètres.

Le dispositif de l'invention, pour l'observation d'un corps céleste depuis un aéronef, comprend à bord de l'aéronef des moyens optiques et des détecteurs tels que définis dans la partie caractérisante de la revendication 1.

De préférence, ces moyens optiques comprennent des moyens interférométriques produisant des franges localisées à l'infini.

Dans une réalisation typique, le dispositif comprend des moyens interférométriques pour recevoir une onde lumineuse incidente de la zone élémentaire observée, décomposer cette onde en au moins deux ondes ayant une différence de marche qui dépend de l'angle d'incidence at produire une image d'interférence de ces deux ondes.

Pour observer les spectrogrammes de plusieurs zones élémentaires avec un même dispositif optique, on dispose les détecteurs en sorte que chaque détecteur fournisse un signal de sortie représentant l'intensité lumineuse de l'image d'une certaine zone élémentaire observée suivant un certain angle d'incidence et on prélève les signaux de sortie d'une série de détecteurs convenablement choisis pour obtenir une suite de signaux qui représentent les variations d'intensité de l'image d'une même zone élémentaire lorsque l'angle d'incidence varie, donc qui représente l'interférogramme de cette zone. Une transformation de Fourier permet, de façon en soi connue, de calculer le spectre de la zone à partir de l'interférogramme.

Les mêmes opérations sont applicables simultanément à toutes les zones élémentaires observées simultanément.

La particularité fondamentale de l'invention est que l'on utilise le défilement de la source observée pour réaliser l'interférogramme au lieu de déplacer une pièce optique dans le dispositif optique.

Dans le dispositif selon le brevet E.U.A. 3 702 735, il faut déplacer le miroir pour faire varier la différence de marche entre les ondes qui interfèrent et la résolution spectrale de l'interféromètre est liée à la course du miroir. Dans un dispositif selon la présente invention, on fait en sorte que la différence de marche des ondes qui interfèrent dépende de l'angle d'incidence de l'onde provenant de la source étudiée en sorte que la variation de la différence de marche s'obtient par la variation de cet angle, laquelle est une conséquence du déplacement de la source.

On décrira ci-après un dispositif conforme à l'invention en référence aux figures du dessin joint sur lequel:

la figure 1 est un schéma d'un polariscope utilisé dans un mode de réalisation d'un dispositif conforme à l'invention;

la figure 2 est un schéma illustrant le fonctionnement du polariscope;

la figure 3 est un schéma d'un dispositif d'observation utilisant le polariscope de la figure 1;

la figure 4 est un schéma de l'interférogramme d'une source observée à travers le dispositif de la figure 3;

la figure 5 est un schéma d'une mosaïque de détecteurs utilisés dans un dispositif conforme à l'invention;

la figure 6 est un schéma du mode de lecture des informations fournies par des détecteurs disposés suivant une ligne parallèle à la direction de défilement de la zone observée;

la figure 7 est un schéma analogue dans le cas d'une pluralité de lignes de détecteurs parallèles formant une mosaïque de détecteurs, et

la figure 8 est un schéma d'un dispositif de détection utilisant un polariscope du type de la figure 1.

On suppose que le dispositif est embarqué à bord d'un satellite à défilement, c'est-à-dire non stationnaire.

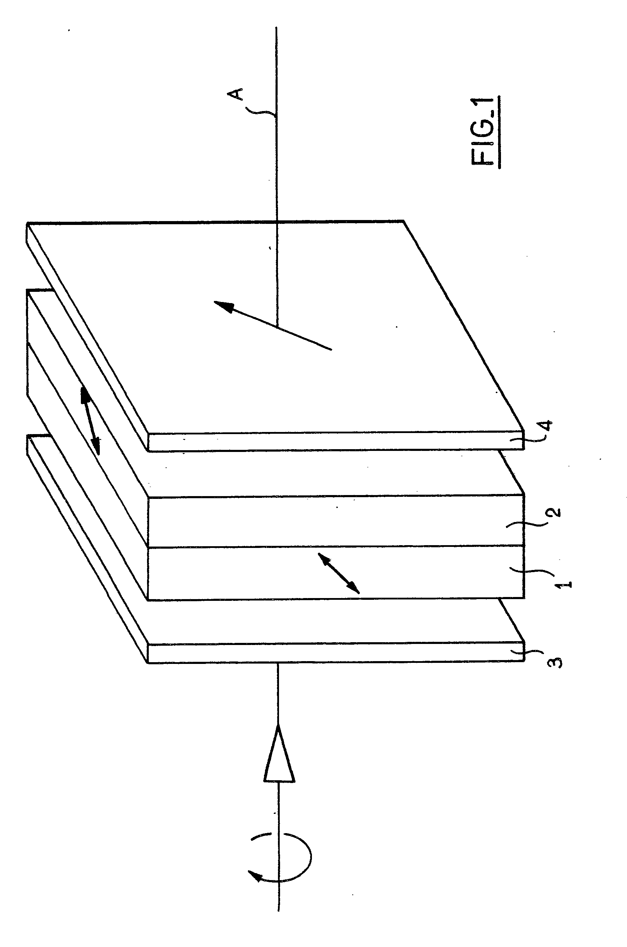

Dans la réalisation représentée sur les figures, l'élément fondamental du dispositif d'observation est un polariscope du SAVART (P) composé (figure 1) de deux lames 1,2 en milieu uniaxe, par exemple en calcite, taillées à 45° par rapport à l'axe optique et tournées de 90° l'une par rapport à l'autre autour de l'axe optique A du dispositif, ces deux lames étant situées entre deux polariseurs 3,4 parallèles ou croisés.

Ces polariscopes sont décrits par exemple dans la publication Isotropic and Anisotropic Media. Application of Anisotropic Materials of Interferometry de Monsieur Francon qui fait partie de l'ouvrage Advanced Optical Techniques (Ed. AC.S. Van Heel—North—Holland, Published Co. Amsterdam) Un interféromètre utilisant un polariscope de Savart est décrit dans un article de la revue Optics Communications (vol. 20, No. 2, fevrier 1977, pages 257—261).

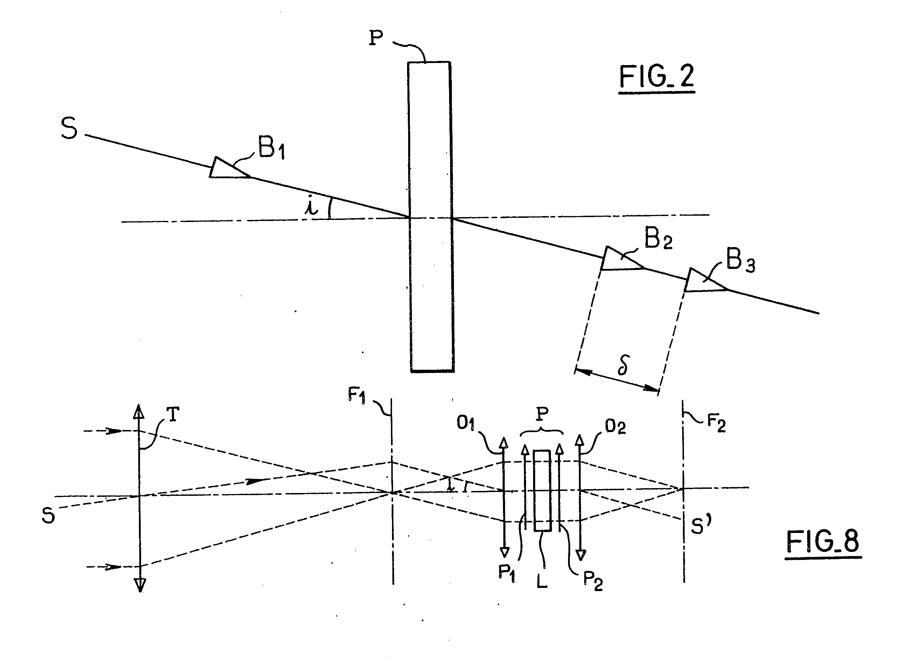

Une onde $B_1$ (figure 2) arrivant d'une zone S à l'infini sous l'incidence i est décomposée par le polariscope en deux ondes $B_2$, $B_3$ qui présentent une différence de marche proportionnelle à sin i et indépendante de l'incidence par rapport au plan de la figure:

$\delta = d$ sin i ou
d = 0,106 e pour la calcite
e = épaisseur de la lame.

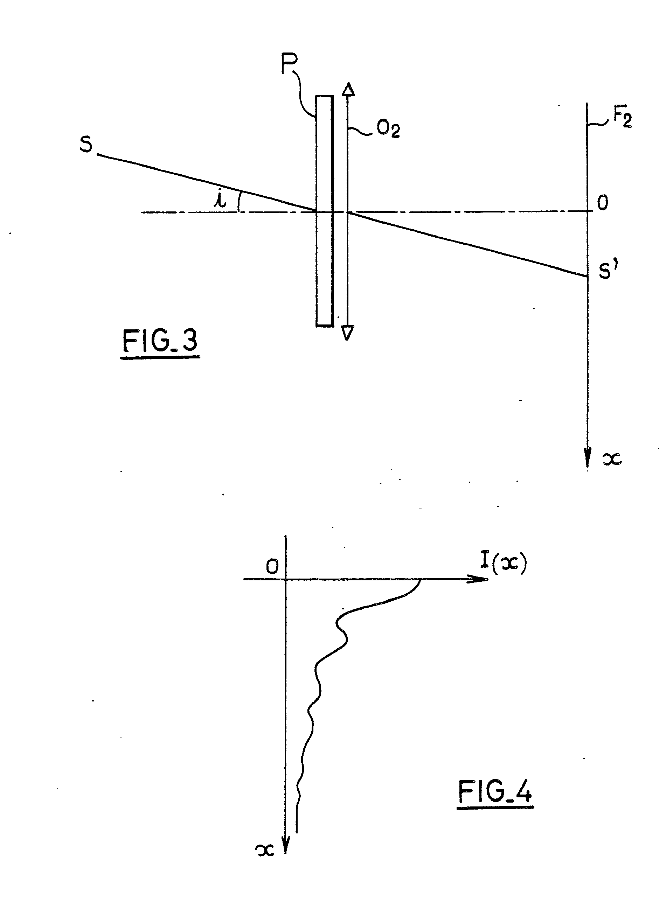

Soit S' l'image de S sur l'axe Ox dans le plan focal $F_2$ d'un objectif $O_2$ placé derrière le polariscope P (figure 3).

L'intensité I(x) de S' est liée à l'état d'interférence par la relation:

$$I_{(x)} = 1 + \cos \frac{2\pi}{\lambda} \delta$$

Si la source S est polychromatique, $I_{(x)}$ est l'interférogramme de $S_{(\lambda)}$ et il suffit de placer sur l'axe Ox une banette de détecteurs D pour enregistrer $I_{(x)}$ avec le déplacement de S (figure 4).

Par exemple, on utilise des détecteurs à transfert de charge CCD (charge-coupled devices). Il est inutile de décrire en détails ces photodétecteurs connus que l'on à a déjà utilisés dans des dispositifs interférométriques, comme décrit par exemple dans la publication "The use of charge-coupled devices for automatic processing of interferograms" (Journal of Optics, vol. 12, n° 2 Paris, France).

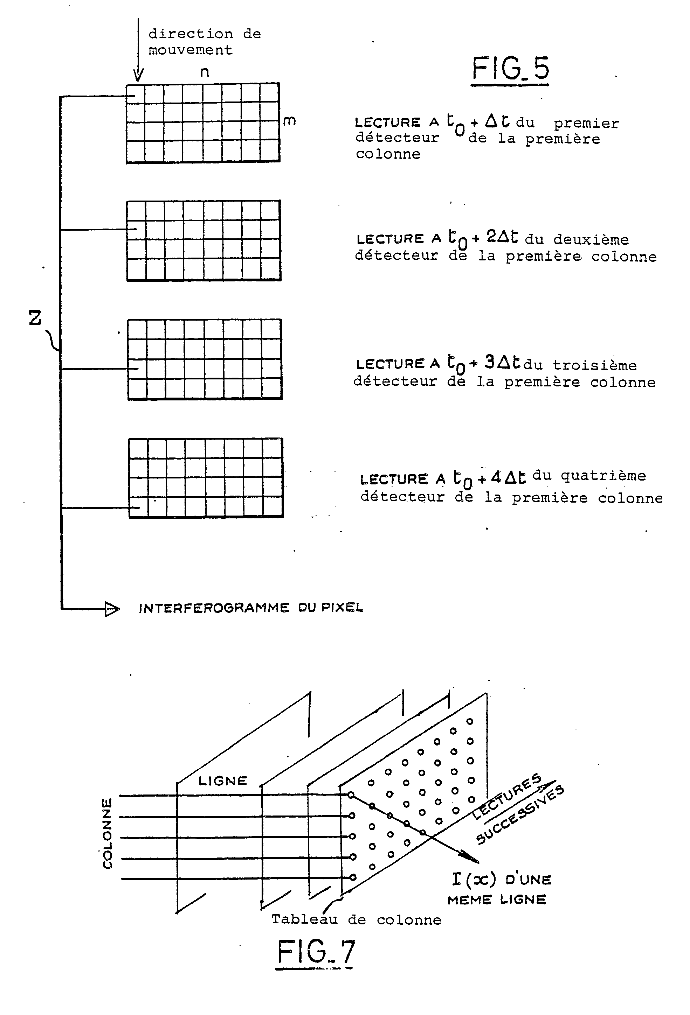

On utilise une mosaïque de détecteurs M (figure 5) en sorte qu'une zone de bande terrestre observée soit observée simultanément par tous les détecteurs de la mosaïque, chaque détecteur fournissant à un instant donné un signal de sortie représentatif de l'intensité de l'image d'une portion de ladite zone vue sous un certain angle d'incidence.

Ce signal de sortie peut être exploité immédiatement ou être stocké en mémoire et exploité ultérieurement pour le calcul d'un spectre.

Cette portion de terre élémentaire ou "pixel" est par exemple un carré de 10 m (haute résolution) ou de 500 à 1 000 m de côté.

La mosaïque comprend par exemple n lignes de m détecteurs (figure 5), les lignes étant parallèles aux franges et perpendiculaires à la direction de mouvement des zones observées par rapport à l'aéronef.

Les sorties des détecteurs d'une même ligne sont lues, ou transférées simultanément à un dispositif de mise en mémoire ou de calcul et deux lectures ou deux transferts successifs sont séparés par un intervalle de temps,

$$\Delta t = \frac{a}{u}$$

a étant la dimension du pixel (par exemple un carré a.a) et u étant le déplacement relatif de l'aéronef et du pixel.

Pour obtenir l'interférogramme d'un pixel dont l'image est vue au temps $t_0 + \Delta t$ par le premier détecteur de la première colonne, on prélève le signal de sortie de ce détecteur à la première lecture $t_0 + \Delta t$, le signal de sortie du deuxième detecteur suivant de la même colonne à la deuxième lecture $t_0 + 2\Delta t$, etc.

Pour obtenir l'interférogramme de la zone adjacente dans la direction de mouvement, on prélève le signal de sortie dudit premier détecteur au temps $t_0 + 2\Delta t$, celui du dit deuxième détecteur au temps $t_0 + 3\Delta t$, etc.

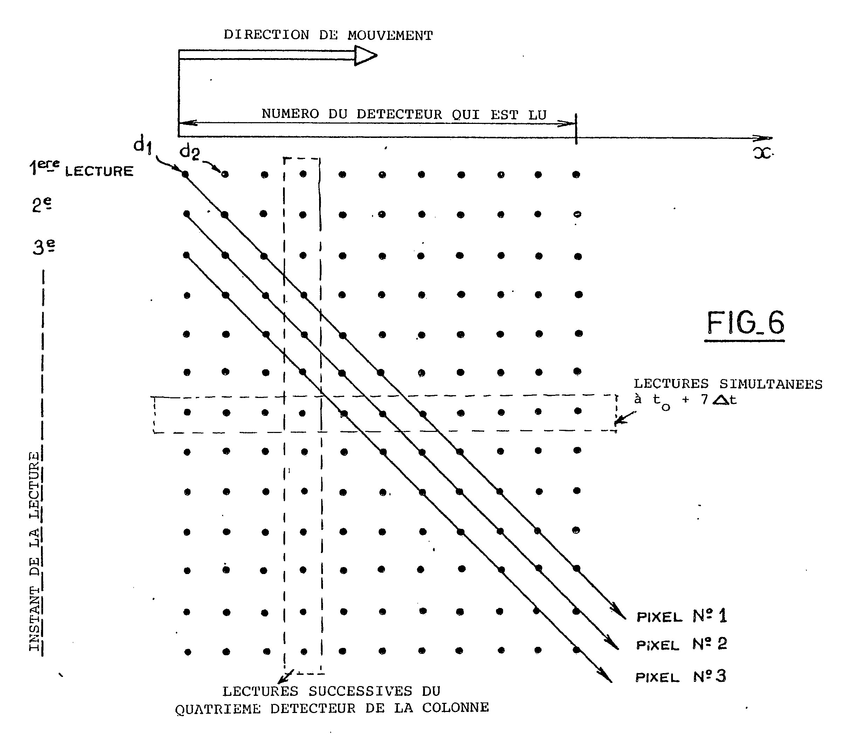

La figure 6 montre les lectures successives de tous les détecteurs d'une même colonne de détecteurs de la fig. 5. Sur cette figure, les points d'une ligne représente les lectures simultanées d'une ligne de détecteurs $d_1$, $d_2$ qui serait parallèle à la direction de mouvement de la zone observée. Les lignes successives représentent les lectures successives. Pour obtenir l'interférogramme du pixel N° 1, les lectures sont prises suivant la diagonale qui part de $d_1$.

La figure 7 représente le même tableau mais en considérant cette fois une pluralité de lignes parallèles de détecteurs, c'est-à-dire une mosaïque de détecteurs.

L'invention n'est pas limitée à ce mode de prélèvement des informations fournies par les détecteurs. Par exemple, on peut n'utiliser qu'un détecteur sur deux.

Si l'on ne considère qu'un pixel, le dispositif, du seul fait du défilement du satellite, fonctionne à l'égard de ce pixel qui constitue une source spectrale complexe, comme un spectromètre et en fournit dans le plan image des valeurs d'intensité qui sont des valeurs de l'interférogramme. Un traitement approprié en temps réel des signaux fournis par les détecteurs permettra de reconstituer le spectre de ce pixel en faisant la transformation de Fourier de l'interférogramme.

La spectroscopie par transformation de Fourier est connue en soi et il n'est pas nécessaire de la décrire plus en détails. On pourra par exemple se reporter à l'ouvrage de P. Bousquet intitulé Spectroscopie Instrumentale (Ed. Dunod, Paris, 1969) et à la bibliographie de cet ouvrage.

Si l'on considère maintenant que le dispositif fournit en temps réel les interférogrammes de tous les pixels observés simultanément, c'est-à-dire de tous les points de l'objet, on peut considérer qu'il fournit l'image de l'objet comme un spectrographe.

Le dispositif est habituellement complété par un télescope T qui fournit de la terre une image dans le plan $F_1$ et par un objectif d'entrée $O_1$ dont le plan focal objet est confondu avec le plan $F_1$ (figure 8).

On n'a pas représenté sur les figures, les moyens électroniques qui reçoivent et traitent les signaux des photodétecteurs pour obtenir le spectrogramme.

Le traitement peut se faire partiellement à bord du satellite et partiellement à terre. Les informations obtenues à bord du satellite sont soit stockées à bord du satellite, soit envoyées à terre.

L'invention n'est pas limitée à l'emploi d'un polariscope linéaire. Selon l'invention, on peut utiliser tout moyen optique utilisant le défilement de la source par rapport au satellite pour réaliser l'interférogramme. Par exemple, il est prévu d'utiliser un spectromètre Fabry-Pérot notamment pour obtenir une très haute résolution spectrale. Dans ce cas, les franges ne sont plus linéaires mais circulaires.

**Revendications**

1. Dispositif pour produire des signaux à traiter de façon en soi connue pour obtenir un interférogramme d'une zone élémentaire (S) d'un corps céleste, notamment de la terre observée depuis un satellite à orbite circulaire, comportant un aéronef apte à se déplacer avec un mouvement relatif dans une direction donnée par rapport à ladite zone élémentaire, caractérisé en ce qu'il comprend:

des moyens optiques (T, $O_1$, P, $O_2$) incluant des moyens interférométriques opérant sans déplacement de pièces optiques qui sont fixés dans l'aéronef et disposés pour recevoir de la lumière de cette zone et pour fournir, par interférométrie, dans un plan, des images successives (S') de la zone élémentaire (S) en conséquence dudit mouvement relatif;

au moins une colonne de détecteurs ($d_1$, $d_2$,...) dans l'aéronef parallèle à ladite direction et coplanaires audit plan pour détecter successivement, à des instants différents, l'intensité lumineuse de chacune desdites images successives, chaque détecteur étant apte à fournir un signal de sortie représentatif de l'intensité lumineuse détectée par le détecteur, les signaux de tous ces détecteurs étant lesdits signaux à traiter pour obtenir l'interférogramme de ladite zone élémentaire.

2. Dispositif selon la revendication 1, caractérisé en ce que lesdits moyens optiques comprennent des moyens interférométriques (P) produisant des franges localisées à l'infini.

3. Dispositif selon la revendication 2, caractérisé en ce que lesdits moyens interférométriques (P) sont aptes à recevoir une onde incidente ($B_1$) de la zone élémentaire observée (S), décomposer cette onde en au moins deux ondes ($B_2$, $B_3$) ayant une différence de marche qui dépend de l'angle d'observation et produire une image d'interférence (S') de ces deux ondes.

4. Dispositif selon la revendication 3, caractérisé en ce que lesdits moyens interférométriques produisent une différence de marche proportionnelle au sinus de l'angle d'incidence.

5. Dispositif selon la revendication 3, caractérisé en ce que lesdits moyens interférométriques comprennent un polariscope de SAVART (P).

6. Dispositif selon la revendication 5, caractérisé en ce que le polariscope comprend deux lames en matière uniaxe (1, 2) taillées à 45° et tournées de 90° l'une par rapport à l'autre, autour de l'axe optique du dispositif l'ensemble de ces deux lames se trouvant entre deux polariseurs (3,4).

7. Dispositif selon la revendication 2, caractérisé en ce que lesdits moyens interférométriques comprennent un spectromètre Fabry-Pérot.

8. Dispositif selon la revendication 1, caractérisé en ce que les détecteurs sont disposés dans un plan suivant une mosaïque (M), chaque détecteur fournissant à un instant donné un signal de sortie représentatif de l'intensité de l'image d'une zone élémentaire observée suivant un certain angle d'incidence.

9. Dispositif selon la revendication 8, caractérisé en ce qu'il comprend des moyens pour prélever séquentiellement les signaux de sortie d'une ligne de détecteurs parallèle à ladite direction de mouvement en sorte que tous les signaux ainsi prélevés soient relatifs aux images successives (S') d'une même zone élémentaire (S).

10. Dispositif selon l'une des revendications 8 et 9, caractérisé en ce que les détecteurs sont des détecteurs à transfert de charges.

**Patentansprüche**

1. Einrichtung zur Erzeugung von Signalen, die auf an sich bekannte Weise zu verarbeiten sind, um ein Interferogramm einer Elementarzone (S) eines Himmelskörpers, insbesondere der von einem Satelliten mit zirkularer Umlaufbahn aus beobachteten Erde, umfassend ein Luftfahrzeug, das fähig ist, sich mit einer Relativbewegung in einer gegebenen Richtung relativ zur genannten Elementarzone fortzubewegen, dadurch gekennzeichnet, daß sie umfaßt:

Optische Einrichtungen (T, $O_1$, P, $O_2$) einschließlich interferometrischer Einrichtungen, die ohne Verschiebung von optischen Bauteilen arbeiten, die im Luftfahrzeug fixiert und angeordnet sind, um Licht dieser Zone zu empfangen und um durch Interferometrie in einer Ebene aufeinanderfolgende Bilder (S) der Elementarzone (S) in Folge der genannten Relativbewegung zu liefern; mindestens eine Kolonne von Detektoren ($d_1$, $d_2$,...) im Luftfahrzeug, parallel zur genannten Richtung und koplanar zur genannten Ebene, um aufeinanderfolgend zu verschiedenen Zeitpunkten die Lichtintensität jedes der genannten aufeinanderfolgenden Bilder zu detektieren, wobei jeder Detektor fähig ist, ein Ausgangssignal zu liefern, das repräsentativ für die durch den Detektor detektierte Lichtintensität ist, wobei die Signale aller dieser Detektoren die genannten Signale sind, die zu verarbeiten sind, um das Interferogramm der genannten Elementarzone zu erhalten.

2. Einrichtung nach Anspruch 1, dadurch gekennzeichnet, daß die genannten optischen Einrichtungen interferometrische Einrichtungen (P) enthalten, die im Unendlichen liegende Interferenzlinien erzeugen.

3. Einrichtung nach Anspruch 2, dadurch gekennzeichnet, daß die genannten interferometrischen Einrichtungen (P) fähig sind, eine von der betrachteten Elementarzone einfallende Welle ($B_1$) zu empfangen, diese Welle in mindestens zwei Wellen ($B_2$, $B_3$) mit einem Gangunterschied, der vom Beobachtungswinkel abhängt, zu zerlegen und ein Interferenzbild (S) dieser zwei Wellen zu erzeugen.

4. Einrichtung nach Anspruch 3, dadurch gekennzeichnet, daß die genannten interferometrischen Einrichtungen einen zum Sinus des Einfallswinkels proportionalen Gangunterschied produzieren.

5. Einrichtung nach Anspruch 3, dadurch gekennzeichnet, daß die genannten interferometrischen Einrichtungen ein SAVARTsches Polariskop enthalten.

6. Einrichtung nach Anspruch 5, dadurch gekennzeichnet, daß das Polariskop zwei Plättchen aus einachsigem Material (1, 2) enthält, welche unter 45° geschnitten um 90° um die optische Achse der Einrichtung gegeneinander verdreht sind, wobei sich dei Gesamtheit diser beiden Plättchen zwischen zwei Polarisatoren (3, 4) befindet.

7. Einrichtung nach Anspruch 2, dadurch gekennzeichnet, daß die genannten interferometrischen Einrichtungen ein Fabry-Pérot-Spektrometer enthalten.

8. Einrichtung nach Anspruch 1, dadurch gekennzeichnet, daß die Detektoren in einer Ebene gemäß einem Mosaik (M) angeordnet sind, wobei jeder Detektor zu einem gegebenen Zeitpunkt ein Ausgangssignal liefert, das repräsentativ für die Intensität des Bildes einer unter einem bestimmten Einfallswinkel beobachteten Elementarzone ist.

8. Einrichtung nach Anspruch 8, dadurch gekennzeichnet, daß sie Einrichtungen enthält, um die Ausgangssignale einer zur genannten Bewegungsrichtung parallelen Zeile von Detektoren sequentiel derart zu entnehmen, daß sich die so entnommenen Signale auf aufeinanderfolgende Bilder (S) ein und derselben Elementarzone (S) beziehen.

10. Einrichtung nach einem der Ansprüche 8 und 9, dadurch gekennzeichnet, daß die Detektoren CCD-Detektoren sind.

**Claims**

1. A device for producing signals to be processed in known manner for obtaining an interferogram of an elementary region (S) of a celestial body, in particular of the earth observed from a satellite having a circular orbit, comprising an aircraft capable of moving with a relative movement in a given direction relative to said elementary region, characterised in that it comprises:

optical means (T, $O_1$, P, $O_2$) including interferometric means operating without movement of optical members which are fixed in the aircraft and arranged so as to receive light from this region and to provide, by interferometry, in a plane, successive images (S') of the elementary region (S) as a result of said relative movement;

at least one column of detectors ($d_1$, $d_2$, ...) in the aircraft parallel to said direction and coplanar with said plane for detecting successively at different moments the light intensity of each of said successive images, each detector being capable of providing an output signal which is representative of the light intensity detected by the detector, the signal from all these detectors being said signals to process for obtaining an interferogram of said elementary region.

2. A device according to claim 1, characterised in that said optical means comprise interferometric means (P) producing localized fringes to infinity.

3. A device according to claim 2, characterised in that said interferometric means (P) are capable of receiving an incident wave (B$_1$) from the observed elementary region (S), of breaking this wave down into at least two waves (B$_2$, B$_3$) having a difference in action dependent on the angle of observation and of producing an interference image (S') of these two waves.

4. A device according to claim 3, characterised in that said interferometric means produce a difference of action proportional to the sine of the angle of incidence.

5. A device according to claim 3, characterised in that said interferometric means comprise a SAVART type polariscope (P).

6. A device according to claim 5, characterised in that the polariscope comprises two blades of uniaxial material (1, 2) cut to 45° and turned by 90° relative to one another around the optical axis of the device, both these two blades being located between two polarizers (3, 4).

7. A device according to claim 2, characterised in that said interferometric means comprise a Fabry-Perot type spectrometer.

8. A device according to claim 1, characterised in that the detectors are arranged in a plane according to a mosaic (M), each detector providing at a given moment an output signal representative of the intensity of the image of an elementary region observed along a certain angle of incidence.

9. A device according to claim 8, characterised in that it comprises means for sequentially sampling the output signals of a line of detectors parallel to said direction of movement so that all the signals sampled in this way are relative to the successive images (S') of the same elementary region (S).

10. A device according to one of claims 8 and 9, characterised in that the detectors are charge transfer detectors.

FIG_1

P

FIG_2

S

B₁

i

B₂

B₃

δ

0 068 922

2

F₁

T

O₁

P

O₂

F₂

S

i

L

S'

P₁

P₂

FIG.8

FIG. 3

FIG. 4

direction de
mouvement

n

m

## FIG_5

LECTURE A $t_0 + \Delta t$ du premier
détecteur de la première
colonne

LECTURE A $t_0 + 2\Delta t$ du deuxième
détecteur de la première colonne

Z

LECTURE A $t_0 + 3\Delta t$ du troisième
détecteur de la première colonne

LECTURE A $t_0 + 4\Delta t$ du quatrième
détecteur de la première colonne

INTERFEROGRAMME DU PIXEL

LIGNE

COLONNE

LECTURES
SUCCESSIVES

$I(x)$ D'UNE
MEME LIGNE

Tableau de colonne

## FIG_7

DIRECTION DE MOUVEMENT

NUMERO DU DETECTEUR QUI EST LU

$d_1$   $d_2$

$x$

$1^{ere}$ LECTURE

$2^{e}$

$3^{e}$

INSTANT DE LA LECTURE

FIG_6

LECTURES SIMULTANEES
à $t_o + 7\triangle t$

PIXEL $N^\circ 1$

PIXEL $N^\circ 2$

PIXEL $N^\circ 3$

LECTURES SUCCESSIVES DU
QUATRIEME DETECTEUR DE LA COLONNE

0 068 922